# FASCICULE DE BREVET EUROPEEN

(11) **EP 0 471 604 B1**
(45) Date de publication et mention de la délivrance du brevet: **21.06.1995**
(21) Numéro de dépôt: 91402114.2
(22) Date de dépôt: 29.07.1991
(51) Int. Cl.: B25J 17/02, B23P 19/00

(54) **Interface mécanique souple**
Mechanischer nachgiebiger Interface
Resilient mechanical interface

(30) Priorité: 06.08.1990 FR 9010034
(43) Date de publication de la demande: 19.02.1992
(73) Titulaire: SEVA, société dite,, F-71100 Chalon-sur-Saône (FR)
(72) Inventeur: Bancon, Georges, F-54500 Vandoeuvre (FR); Molter, Martial, F-57000 Metz (FR)
(74) Mandataire: Jacobson, Claude

(56) Documents cités:
- WO-A-88/01555
- GB-A- 1 481 624
- US-A- 4 179 783
- US-A- 4 400 885
- US-A- 4 789 292

## Description

La présente invention est relative à un interface mécanique souple ou "bloc compliant". Elle s'applique en particulier au montage d'un outil de préhension sur un bras de manipulateur. Voir par exemple US-A-4789292.

Lorsqu'un manipulateur doit amener une première pièce sur une seconde pièce, il est très difficile d'obtenir un positionnement rigoureux de façon répétitive. En effet, le manipulateur peut amener la première pièce à une position très précise, mais la seconde pièce peut être décalée par rapport à cette position. Ce problème est particulièrement délicat lorsqu'il s'agit de pièces fragiles telles que les deux éléments (dalle et cône) d'un tube de téléviseur.

Une solution classique consiste à mesurer à chaque fois la position exacte de la seconde pièce et à corriger, en trois dimensions, la position finale de la première pièce. Cette solution est lente et difficile à mettre en oeuvre.

L'invention a pour but de fournir un interface mécanique ayant une souplesse telle qu'il puisse s'adapter librement de lui-même aux décalages de position entre les deux pièces sans qu'il soit nécessaire de connaître ceux-ci.

A cet effet, l'invention a pour objet un interface mécanique souple comprenant :
- un carter comportant un flasque supérieur;
- un plateau inférieur et un plateau supérieur montés dans ce carter, le plateau inférieur étant librement mobile dans son plan;
- une liaison à double rotule entre les deux plateaux; et
- une plaque porte-outil portée par le plateau inférieur;
   caractérisé en ce que :
- le carter comporte un flasque inférieur parallèle au flasque supérieure;
- chaque plateau est guidé de façon a être librement mobile dans son plan par rapport au carter et par rapport à l'autre plateau; et
- la liaison à double rotule comprend un arbre support monté à rotule fixe dans l'un des plateaux et à rotule mobile dans l'autre plateau, la plaque étant montée à coulissement vertical à l'extrémité inférieure de cet arbre support.

D'autres caractéristiques figurent dans les sous-revendications.

Un exemple de réalisation de l'invention va maintenant être décrit en regard des dessins annexés, sur lesquels :
- la figure 1 est une vue en coupe longitudinale d'un interface mécanique souple conforme à l'invention, prise suivant la ligne I-I de la figure 2;
- la figure 2 est une vue prise en coupe suivant la ligne II-II de la figure 1 ;
- la figure 3 est une vue en élévation prise suivant la flèche III de la figure 1 ;
- la figure 4 est une vue prise en coupe suivant la ligne IV-IV de la figure 3 ; et
- la figure 5 est une vue prise en coupe suivant la ligne V-V de la figure 2.

L'interface mécanique souple, ou bloc compliant, représenté aux dessins est destiné à être interposé entre l'extrémité d'un bras de manipulateur (non représenté) et un outil de préhension (non représenté), par exemple une pince ou une ventouse, qui se fixe sur une plaque porte-outil 1. L'interface comprend essentiellement un carter cylindrique 2 dont l'axe X-X est vertical en cours d'utilisation, deux plateaux horizontaux inférieur 3 et supérieur 4 disposés dans ce carter, un arbre de support articulé 5 à peu près vertical, et un dispositif de support 6 monté à l'extrémité inférieure de cet arbre, au-dessous du carter.

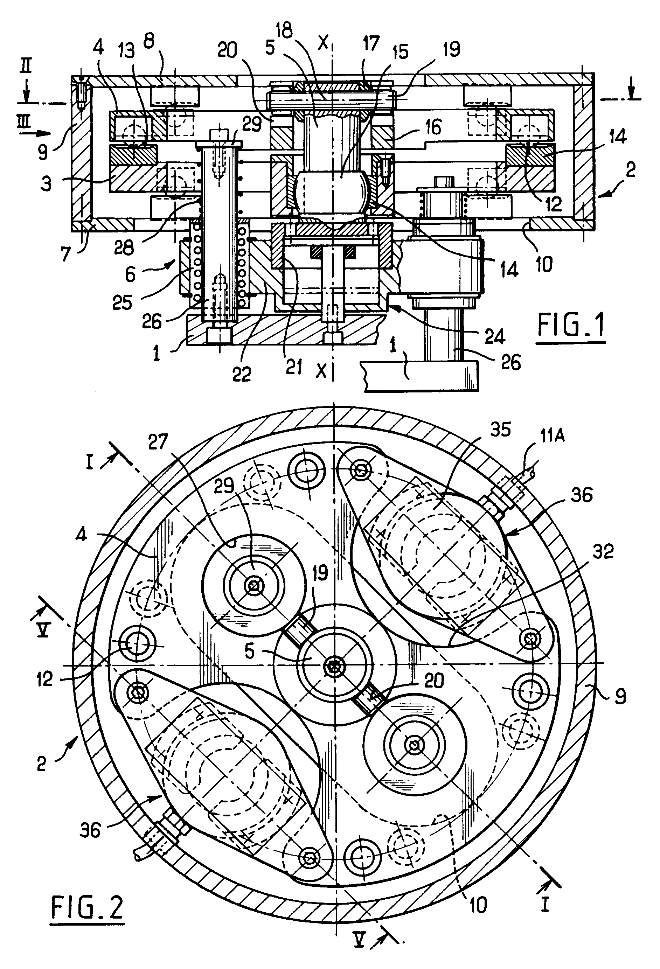

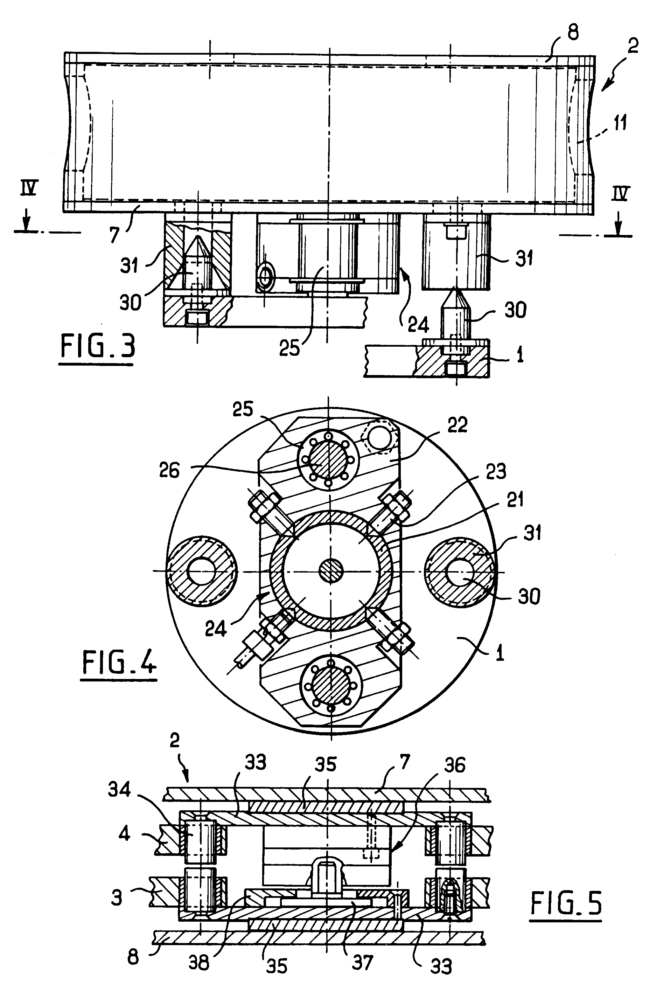

Le carter 2 comprend deux flasques horizontaux, inférieur 7 et supérieur 8, et une paroi périphérique 9 qui les relie. Le flasque 8 est destiné à être fixé à l'extrémité du bras du manipulateur, et le flasque 7 présente une large ouverture centrale 10 de forme oblongue (figure 2). La paroi 9 présente des lumières 11 (figure 3) pour le passage de conduites 11A (figure 2) d'alimentation de vérins en fluide sous pression, dont le rôle apparaîtra plus loin.

Les plateaux 3 et 4 sont superposés et munis sur leurs deux faces de plusieurs billes 12. Ces billes coopèrent avec des surfaces de roulement 13 définies sur des blocs de roulement 14 qui sont fixés sur les faces intérieures des deux flasques et sur les deux faces de chaque plateau.

Ainsi, chaque plateau est guidé dans son plan horizontal et peut se déplacer librement dans ce plan, dans la limite des dimensions des surfaces de roulement 13, sans venir au contact du carter.

Au centre du plateau inférieur 3 est fixé un siège de rotule sphérique 14 dans lequel est montée une rotule 15 solidaire de l'arbre 5. Au-dessus de cette rotule, l'arbre 5 traverse avec jeu un collet cylindrique 16 prévu au centre du plateau supérieur 4 et porte à son extrémité une seconde rotule sphérique 17. Celle-ci a pour diamètre le diamètre intérieur du collet 16 et est traversée par un axe diamétral 18 dont les extrémités sont reçues à coulissement dans des encoches verticales 20 respectives ménagées dans la partie supérieure du collet 16.

Le dispositif de support 6 comprend une première pièce 21, en forme de cuvette renversée, solidaire de l'extrémité inférieure de l'arbre 5, sous la rotule 15 et en saillie sous le carter. Sur cette pièce 21 s'emboîte un évidement central étagé d'un porte-douilles 22, de forme générale plane et horizontale. Ce porte-douilles se fixe sur la pièce 21 par plusieurs vis radiales 23 (figure 4), et il délimite avec cette pièce un vérin central 24, à simple effet, servant au réindexage de la plaque porte-outil 1, dont il sera question plus loin. La tige de piston du vérin 24 fait saillie vers le bas et est fixée au centre de la plaque 1.

De part et d'autre du vérin 24, le portedouilles 22 est équipé de deux douilles à billes 25 à axes verticaux. Chacune de ces douilles est traversée par une colonne 26 dont l'extrémité inférieure est fixée à la plaque 1 et dont l'extrémité supérieure peut pénétrer largement dans le carter 2 en traversant avec un large jeu radial l'ouverture 10 du flasque inférieur 7 et un orifice respectif 27 (figure 2) ménagé dans chacun des plateaux 3 et 4. Un ressort hélicoïdal 28 est comprimé entre la face supérieure de chaque douille 25 et une rondelle 29 fixée à l'extrémité supérieure de la colonne 26 associée.

De plus (figures 3 et 4), la plaque 1 porte sur sa face supérieure deux ergots cylindriques 30 à tête conique, diamétralement opposés, adaptés pour pénétrer sans jeu dans deux douilles de réindexage 31 à axes verticaux et à entrée conique fixées sur la face inférieure du flasque 7.

Chaque plateau 3,4 présente deux larges échancrures semi-circulaires 32, diamétralement opposées et disposées angulairement à 90° des orifices 27. Une mâchoire de frein 33 est montée en travers de chaque échancrure, sur la face extérieure du plateau correspondant, et ses deux extrémités sont reliées à ce plateau par des douilles coulissantes 34 à axe vertical. La face extérieure de chaque mâchoire porte une plaquette de frein 35 (figure 5) interposée entre cette mâchoire et la face intérieure du flasque de carter adjacent.

Un vérin à double effet 36 comporte un corps fixé sur la face inférieure de chaque mâchoire 33 supérieure. Sa tige de piston fait saillie vers le bas et porte un disque horizontal 37 (figure 5) monté sans jeu vertical mais avec une liberté de débattement horizontal dans un guide 38, en forme de coupelle inversée, fixé sur la face supérieure de la mâchoire 33 inférieure correspondante.

L'interface mécanique ainsi décrit peut être utilisé de la manière suivante pour positionner la dalle d'un tube de téléviseur sur le cône de ce tube, en vue de leur collage mutuel. La surface de raccordement du cône est située dans un plan à peu près horizontal, sans que sa position horizontale, verticale et angulaire soit connue de façon parfaitement précise.

Le vérin 24 est rétracté, de sorte que les ergots 30 pénètrent dans les douilles 31, comme illustré sur la moitié gauche de la figure 3 et également de la figure 1, ce qui fait coïncider l'axe de la plaque 1 avec l'axe X-X vertical du carter 2. Les vérins 36 sont alors mis en extension, ce qui applique les plaquettes 35 sur les flasques du carter et immobilise les deux plateaux par rapport à ce dernier. L'ensemble de l'interface est ainsi rigidifié, et la position de la plaque 1 par rapport au bras du manipulateur est parfaitement définie.

Le manipulateur va alors saisir une dalle, dont la position est connue avec précision, et l'amène au-dessus du cône. Le vérin 24 est relâché, et les deux vérins 36 sont rétractés, ce qui rend l'interface "mou". La plaque 1 descend quelque peu sous l'effet de son poids et de celui de la dalle, en comprimant les ressorts 28 et en faisant sortir les ergots 30 des douilles 31, comme représenté dans la moitié droite des figures 1 à 3. Le manipulateur abaisse la dalle, et celle-ci se positionne sur le cône grâce à des butées prévues sur ce dernier. Ce positionnement s'effectue sans difficulté car la plaque 1 peut prendre n'importe quelle position, avec six degrés de liberté, sans exercer aucun effort de réaction sur le manipulateur ou sur la dalle.

Lorsque la dalle est en place, on met de nouveau en extension les vérins 36, ce qui ne laisse à la plaque 1 qu'un seul degré de liberté, suivant l'axe de l'arbre 5, grâce à la solidarisation en rotation de la plaque 1 avec le plateau supérieur 4 assurée par la coopération de l'axe 19 avec les échancrures 20. Le manipulateur peut alors libérer la dalle et relever l'interface, sans risque de perturber la position de la dalle.

Pour pouvoir ensuite aller saisir une autre dalle, on rétracte les deux vérins 36, et on procède à un réindexage de la plaque 1 par rapport au carter 2 en rétractant le vérin 24, puis on rigidifie l'interface en mettant les vérins 36 en extension, ce qui ramène à l'état initial décrit plus haut.

En variante, la saisie de la nouvelle dalle pourrait également s'effectuer en rendant "mou" l'interface, ce qui supprimerait la nécessité de connaître avec précision la position des dalles à saisir.

## Revendications

1. Interface mécanique souple, du type comprenant :
- un carter (2) comportant un flasque supérieur (8);
- un plateau inférieur (3) et un plateau supérieur (4) montés dans ce carter, le plateau inférieur étant librement mobile dans son plan;
- une liaison à double rotule (15, 17) entre les deux plateaux; et
- une plaque porte-outil (1) portée par le plateau inférieur;
caractérisé en ce que :
- le carter (2) comporte un flasque inférieur (7) parallèle au flasque supérieur (8);
- chaque plateau (3,4) est guidé de façon a être librement mobile dans son plan par rapport au carter et par rapport à l'autre plateau; et
- la liaison à double rotule comprend un arbre support (5) monté à rotule fixe (15) dans l'un (3) des plateaux et à rotule mobile (17) dans l'autre plateau (4), la plaque (1) étant montée à coulissement vertical à l'extrémité inférieure de cet arbre support.

2. Interface mécanique souple suivant la revendication 1, caractérisé en ce que la plaque (1) est montée sur l'arbre support (5) par l'intermédiaire de ressorts (28).

3. Interface mécanique souple suivant la revendication 1 ou 2, caractérisé en ce que la rotule mobile (17) est traversée par un axe (19) perpendiculaire à l'arbre support (5) et dont les extrémités coulissent dans des lumières (20) allongées verticalement prévues dans le plateau (4) correspondant.

4. Interface mécanique souple suivant l'une quelconque des revendications 1 à 3, caractérisé en ce qu'il comprend des moyens (33 à 36) de blocage sélectif des plateaux (3, 4) par rapport au carter (2) dans une position quelconque de ces plateaux.

5. Interface mécanique souple suivant la revendication 4, caractérisé en ce que les moyens de blocage sélectif (33 à 36) comprennent des plaquettes de frein (35) montées verticalement coulissantes sur chaque plateau (3, 4) et adaptées pour coopérer avec le carter (2), et au moins un vérin (36) agissant perpendiculairement sur ces plaquettes.

6. Interface mécanique souple suivant l'une quelconque des revendications 1 à 5, caractérisé en ce que la plaque (1) et le flasque inférieur (8) du carter comportent des moyens (24, 30, 31) de réindexage mutuel.

7. Interface mécanique souple suivant la revendication 6, caractérisé en ce que les moyens de réindexage comprennent des ensembles douille-ergot (30, 31) et un vérin (24) agissant entre la plaque (1) et le carter (2).

## Claims

1. Flexible mechanical interface comprising:
- a housing (2) with an upper flange (8);
- a lower plate (3) and an upper plate (4) mounted in this housing, the lower plate being freely movable in its plane;
- a double ball (15, 17) connection between the two plates; and
- a tool holder disc (1) supported on the lower plate,
characterised in that
- said housing (2) has a lower flange (7) parallel to the upper flange (8);
- each plate (3, 4) is guided so as to be freely movable in its plane relative to the housing and relative to the other plate, and
- said double ball connection comprises a support shaft (5) mounted at the fixed ball joint (15) in one (3) of the plates and at the movable ball joint (17) in the other plate (4), the disc (1) being mounted to slide vertically to the lower end of this support shaft.

2. Flexible mechanical interface according to Claim 1, characterised in that the disc (1) is mounted on the support shaft (5) by means of springs (28).

3. Flexible mechanical interface according to Claim 1 or 2, characterised in that the movable ball joint (17) has an axis (19) perpendicular to the support shaft (5) passing through it, the ends of which slide into vertically extended openings (20) provided in the corresponding plate (4).

4. Flexible mechanical interface according to any one of Claims 1 to 3, characterised in that it comprises means (33 to 36) to selectively lock plates (3, 4) in relation to the housing (2) in any position whatsoever of these plates.

5. Flexible mechanical interface according to Claim 4, characterised in that the selective locking means (33 to 36) comprise brake discs (35) mounted to slide vertically on each plate (3, 4) and adapted to cooperate with the housing (2), and have at least one cylinder (36) acting perpendicularly on these discs.

6. Flexible mechanical interface according to any one of Claims 1 to 5, characterised in that the disc (1) and the lower flange (8) of the housing have mutual relocking means (24, 30, 31).

7. Flexible mechanical interface according to Claim 6, characterised in that the re-locking means comprise pin and socket assemblies (30, 31) and a cylinder (24) acting between the disc (1) and the housing (2).

## Patentansprüche

1. Nachgiebige mechanische Schnittstelle, umfassend
- ein Gehäuse (2) mit einer oberen Wange (8),
- eine untere Platte (3) und eine obere Platte (4), die in diesem Gehäuse montiert sind, wobei die untere Platte in ihrer Ebene frei beweglich ist,
- eine Verbindung mit zweifachem Kugelgelenk (15, 17) zwischen den beiden Platten und
- eine Werkzeugträgerplatte (1), die von der unteren Platte getragen ist,
dadurch gekennzeichnet, daß
- das Gehäuse (2) eine untere Wange (7) besitzt, die zur oberen Wange (8) parallel ist,
- jede Platte (3, 4) so geführt ist, daß sie in ihrer Ebene bezüglich des Gehäuses und bezüglich der anderen Platte frei beweglich ist, und
- die Verbindung mit doppeltem Kugelgelenk eine Tragwelle (5) umfaßt, die mit feststehendem Kugelgelenk (15) in einer (3) der Platten und mit beweglichem Kugelgelenk (17) in der anderen Platte (4) montiert ist, wobei die Platte (1) vertikal verschiebbar am unteren Ende dieser Tragwelle montiert ist.

2. Mechanische nachgiebige Schnittstelle nach Anspruch 1, dadurch gekennzeichnet, daß die Platte (1) auf der Tragwelle (5) über Federn (28) montiert ist.

3. Mechanische nachgiebige Schnittstelle nach Anspruch 1 oder 2, dadurch gekennzeichnet, daß das bewegliche Kugelgelenk (17) von einer zur Tragwelle (5) senkrechten Achse (19) durchquert ist, deren Enden in vertikal langgestreckten Öffnungen (20) gleiten, die in der entsprechenden Platte (4) vorgesehen sind.

4. Mechanische nachgiebige Schnittstelle nach einem der Ansprüche 1 bis 3, dadurch gekennzeichnet, daß sie Mittel (33 bis 36) zur selektiven Blockierung der Platten (3, 4) bezüglich des Gehäuses (2) in einer beliebigen Stellung dieser Platten besitzt.

5. Mechanische nachgiebige Schnittstelle nach Anspruch 4, dadurch gekennzeichnet, daß die Mittel (33 bis 36) zur selektiven Blockierung Bremsplättchen (35), die vertikal verschiebbar auf jeder Platte (3, 4) montiert sind und mit dem Gehäuse (2) zusammenwirken können, und mindestens einen Arbeitszylinder (36) umfassen, der senkrecht auf diese Plättchen einwirkt.

6. Mechanische nachgiebige Schnittstelle nach einem der Ansprüche 1 bis 5, dadurch gekennzeichnet, daß die Platte (1) und die untere Wange (8) des Gehäuses Mittel (24, 30, 31) zur gegenseitigen Wiedereinrastung aufweisen.

7. Mechanische nachgiebige Schnittstelle nach Anspruch 6, dadurch gekennzeichnet, daß die Mittel zum Wiedereinrasten Buchsen-Zapfen-Einheiten (30, 31) und einen Arbeitszylinder (24) aufweisen, der zwischen der Platte (1) und dem Gehäuse (2) wirkt.
